# EUROPEAN PATENT SPECIFICATION

(11) **EP 3 624 077 B1**
(45) Date of publication and mention of the grant of the patent: **01.11.2023**
(21) Application number: 18194757.3
(22) Date of filing: 17.09.2018
(51) Int. Cl.: G08B 13/191, G01J 5/08, G01J 5/0806, G01J 5/10

(54) **OBJECT DETECTION SENSOR NETWORK FOR CALCULATING A MOTION PATH OF AN OBJECT**
OBJEKTDETEKTIONSSENSORNETZWERK ZUR BERECHNUNG EINER BEWEGUNGSBAHN EINES OBJEKTS
RÉSEAU DE CAPTEURS DE DÉTECTION D'OBJET POUR CALCULER UNE TRAJECTOIRE DE MOUVEMENT D'UN OBJET

(43) Date of publication of application: 18.03.2020
(73) Proprietor: Zumtobel Lighting GmbH, 6850 Dornbirn (AT); Tridonic GmbH & Co. KG, 6851 Dornbirn (AT)
(72) Inventor: Jelicic, Vana, 6850 Dornbirn (AT); Mitterbacher, Andre, 6850 Dornbirn (AT); Burtscher, Florian, 6850 Dornbirn (AT)
(74) Representative: Rupp, Christian

(56) References cited:
- WO-A1-2013/128307
- DE-U1- 8 705 296
- US-A1- 2017 205 289
- US-A1- 2017 254 703

## Description

### TECHNICAL FIELD

The present invention relates to the field of object detection sensors and a network thereof. The present invention also relates to motion detection and machine learning (ML), and in particular relates to calculating a motion path of an object.

### BACKGROUND

In the prior art, conventional object detection sensors are used in lighting technology, to generate a switch signal and automatically switch lighting means depending on the presence of a detected object. For object detection, such sensors mainly use passive infrared (PIR, also called pyroelectric infrared), or radar technology.

For some applications, additional information beyond the presence of an object, such as the direction of movement or the exact region in which the object is or moves, is useful. If, for example, the direction of movement is known, luminaires arranged in the direction of movement can be switched on and luminaires arranged opposite to the direction of movement can be switched off or remain off. However, such information is also interesting for the statistical recording of the use of buildings or user behavior.

EP 2 991 452 A2 discloses a system for spatially resolved lighting control. More particularly, this document relates to a system in which one or more motion sensors detect movements in an area, and at least one light source is controlled accordingly. However, in this document the motion sensors are only used to control light sources. A direction of movement or a position of an object is not determined by this system. Further, only digital output of the motion sensors is considered (i.e. it is only evaluated whether an object is detected or not), which results in low spatial resolution of the motion sensors and the system.

US20150102226 discloses a passive infrared sensor system for position detection.

US 2017/0254703 A1 discloses a pyroelectric infrared motion sensor system comprising a plurality of sensing elements, which are connected in pairs to infrared sensors. The sensors determine the different signals between two sensing elements, and hand an analog sensing signal to a central processing unit. This processing unit determines a motion direction and/or position of a target, for example a person, from these signals.

WO 2013/128307 A1 discloses a passive infrared sensor system for position detection. The system comprises two distinct passive infrared sensors 1 and 2, which each comprise at least two sensing elements. From differential signals of these sensing elements, an analog output signal is generated and handed to a central processing unit 15. The central processing unit 15 determines a motion direction of a target, for example a person, therefrom.

US 2017/0205289 A1 discloses a method and apparatus for detecting direction of motion with a passive sensor. Document D3 especially shows passive infrared sensors with a plurality of sensing elements, covering slightly different angles with regard to the sensor. From different signals between the individual sensing elements, analog signals are determined, based upon which a motion direction of a target person is determined.

Thus, when using prior art motion sensor systems, determining a precise movement direction or position of an object is not possible, due to the low accuracy of such systems.

As a result, in the prior art, there is need for an object detection solution, with high spatial resolution, which can precisely calculate a motion path or a position of an obj ect.

### SUMMARY

In view of the above-mentioned drawbacks, the present invention aims to improve the conventional object detection sensors and systems.

Therefore, it is an object of the present invention to provide an object detection sensor network and a related method that improve the above-mentioned disadvantages. In particular, the object is to provide a network and a method for detecting objects, which enables an accurate and favorable determination of the direction of movement, and also e.g. the distance, the position of the movement path and / or the number of detected objects.

These and other objects, which become apparent upon reading the following description, are solved by the subject-matter of the independent claims. The dependent claims refer to preferred embodiments of the invention.

A first aspect of the present invention provides an object detection sensor network according to claim 1.

Thus, it is possible to determine the direction of movement of an object with respect to the object detection sensors of the system, the distance between the sensors and the object, the position of the path of movement of the object with respect to the sensors and / or the number of moving objects located in the detection range of the sensor.

Preferably, the object detection sensor can be a commercially available motion detector which outputs an on- or off-signal (i.e. a switching signal) and by which a sensor signal from which the switching signal is derived is additionally output. The sensor signal is in particular output as the analogue signal.

Preferably, the object detection sensor may be a pyroelectric sensor having a multiplicity of sensor elements and the sensor signal may be an analogue signal which is composed of signals generated by the sensor elements. Preferably, the sensor elements may correspond to the detection windows of the object detection sensor. Preferably, the sensor elements may be dual sensor elements. More preferably, the sensor elements may be quad sensor elements.

Preferably, the object detection sensors, the one or more processing units and the signal combination unit are connected in a wired fashion to transmit signals. However, the respective entities can exchange said signals also in a wireless fashion.

Preferably, according to the present invention, a direction of movement (i.e. the motion direction), distance, position and / or number of objects is determined on the basis of the signal waveform of the signal emitted by an object detection sensor (i.e. the analogue signal output by an object detection sensor), making use of the fact that movements in a certain direction, at a certain distance and / or in a certain position cause a specific, characteristic signal or cause similar features and / or patterns in the signal. A signal change also occurs when a number of objects / persons moving in a detection area, for example, in a certain direction changes.

Preferably, the object can in particular be a human being, such as a moving person. It is also possible to detect several moving objects, and the number thereof.

For signal analysis of the analogue signal or the extraction of at least one feature, of the feature combination and / or of the pattern from the analogue signal, the processing unit may be configured to align a first vertex, height and / or duration of amplitudes in the time domain, a number of peaks in a period of the analogue signal in the frequency domain, and / or to determine a signal energy of the analogue signal. Preferably, a good differentiation of movements can be done by determining the highest minimum amplitude frequency and the highest amplitude frequency in the time domain or frequency domain of the analogue signal.

The features, feature combinations and / or patterns with the respective associated direction of movement, distance, position and / or number may be specified by the manufacturer or user. For the use of the network at different locations and / or the use of different object detection sensors, it may be useful to learn the assignment on site with the sensor used or to adapt the predetermined features, feature combinations and / or patterns to current conditions (premises, installation location, sensor).

For this purpose, objects / persons in the number to be detected, in the direction of movement to be detected, the distance to be detected and / or the position to be detected can be moved in the detection range of the sensor and the signal generated by the sensor is analyzed or the associated features, feature combinations and / or patterns determined or adjusted. In this case, the number of objects currently detected by the object detection sensor and / or the direction of movement, the distance and / or the position of the object currently detected by the network can be input via an input device and assigned to the specific features, feature combinations and / or patterns by means of an allocation device.

This process can be repeated several times, wherein the network can be designed to determine, by means of learning algorithms, features, feature combinations and / or patterns for the respective direction of movement, distance, location and / or number of objects for the assignment. The learning algorithms can in particular be performed in the one or more processing units.

In an implementation form of the first aspect, the object detection sensors are passive infrared, PIR, sensors.

Alternatively, it is also possible that the object detection sensors are radar sensors, or a combination of PIR sensors and radar sensors.

In an implementation form of the first aspect, the object detection sensors have partially overlapping FOVs.

Preferably, the FOVs of at least two object detection sensors overlap, at least partially.

Preferably, the FOV is the extent of an observable scenery that is seen at any given moment. In the case of the object detection sensors, it can be a solid angle through which the object detection sensor is sensitive to electromagnetic radiation.

Preferably, the at least two object detection sensors are arranged according to a predefined rotation angle towards each other.

In an implementation form of the first aspect, the object detection sensors send their analogue output signals to a central processing and signal combination unit.

Preferably, the central processing unit and the signal combination unit are provided by one combined unit. This combined unit can in particular be electric circuitry, but also a server or a cloud service.

In an implementation form of the first aspect, the one or more processing units are provided with a neural network and/or at least one ML model.

Preferably, the neural network is an artificial neural network, which is composed of artificial neurons or nodes. More preferably, artificial neural networks may be used for predictive modeling, adaptive control and applications where they can be trained via a dataset. Self-learning resulting from experience can occur within the neural network, which can derive conclusions from a complex and seemingly unrelated set of information.

In an implementation form of the first aspect, the one or more processing units calculate the motion direction in a time synchronized manner and/or associate a time stamp with the calculated motion direction, wherein the time stamp is supplied to the signal combination unit together with the information representing the calculated motion direction.

In an implementation form of the first aspect, the object detection sensors are arranged in the same room of a building.

A room e.g. can also be a corridor, an open office space, or a retail space.

In an implementation form of the first aspect, the signal combination unit is designed to calculate the most probable motion path.

Preferably, the most probable motion path is a result of calculation performed in the neural network.

A second aspect of the present invention provides a method according to claim 8 for operating an object detection sensor network according to the first aspect or any of its implementations.

In an implementation form of the second aspect, the object detection sensors are passive infrared, PIR, sensors.

In an implementation form of the second aspect, the object detection sensors have partially overlapping FOVs.

In an implementation form of the second aspect, the method further comprises sending, by the object detection sensors, their analogue output signals to a central processing and signal combination unit.

In an implementation form of the second aspect, the one or more processing units are provided with a neural network.

In an implementation form of the second aspect, the method further comprises calculating, by the one or more processing units, the motion direction in a time synchronized manner, and/or associating, by the one or more processing units, a time stamp with the calculated motion direction, wherein the time stamp is supplied to the signal combination unit together with the information representing the calculated motion direction.

In an implementation form of the second aspect, the object detection sensors are arranged in the same room of a building.

In an implementation form of the second aspect, the signal combination unit is designed to calculate the most probable motion path.

### BRIEF DESCRIPTION OF DRAWINGS

In the following, the invention is described exemplarily with reference to the enclosed figures, in which
- FIG. 1: shows a schematic view of a generic object detection sensor network for illustration purposes and is not according to the claimed invention.
- FIG. 2: shows a schematic view of a detection area of an object detection sensor shown for illustration purposes.
- FIG. 3: shows diagrams of analogue signals output by an object detection sensor shown for illustration purposes.
- FIG. 4: shows a schematic view of an algorithm for detecting a motion path of an object with an object detection sensor network of PIR sensor nodes.
- FIG. 5: shows a schematic view of a generic method for illustration purposes and not according to the claimed invention.
- FIG. 6: shows analysis results of data processed in the object detection sensor network according to an embodiment of the present invention.

### DETAILED DESCRIPTION OF PREFERRED EMBODIMENTS

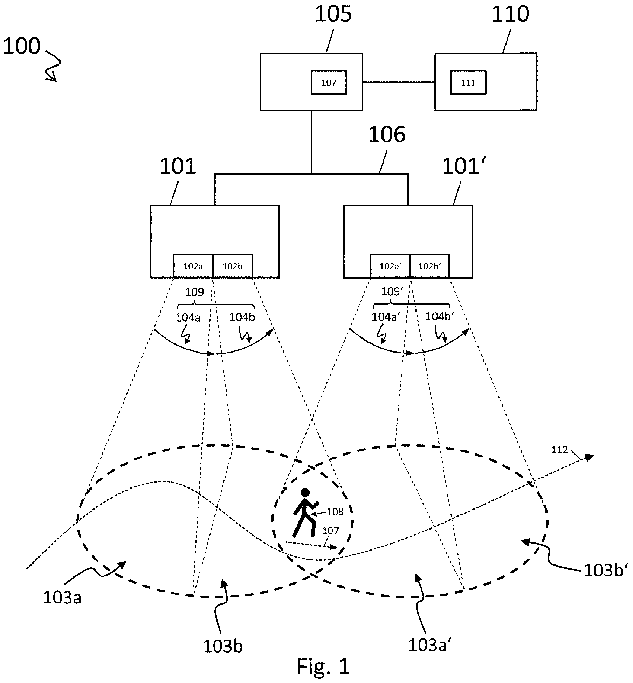

FIG. 1 shows a schematic view of a generic object detection sensor network 100 for illustration purposes.

As it is shown in Fig. 1, the network 100 comprises at least two object detection sensors 101, 101'. Although there are only two object detection sensors 101, 101' shown, there can be an arbitrary number of such sensors greater than or equal to two. Each of said object detection sensors 101, 101' has at least two detection windows 102a, 102b, 102a', 102b', which correspond to different detection areas 103a, 103b, 103a', 103b' or detection angles 104a, 104b, 104a', 104b'. In other words, a different detection angle implies a different detection area due to the projection to a respective surface, e.g. a floor or wall of a room. Again in other words, the detection areas 103a, 103b, 103a', 103b' are spread around a FOV of the object detection sensor 101, 101', e.g. by means of an optional lens (e.g. a Fresnel lens). There can in particular be more detection areas 103a, 103b, 103a', 103b' than shown in Fig. 1, e.g. depending on a configuration of a used lens. The detection windows 102a, 102b, 102a', 102b' in particular correspond to, or are sensing elements (as e.g. used in PIR sensors or dual or quad PIR sensors). Such sensing elements within an object detection sensor 101, 101' can be differentially connected (as e.g. in commercial off-the-shelf object detection sensors, such as (dual) PIR sensors). Preferably, these sensing elements "multiply" on a projection area, because of an optional lens in front of the object detection sensor 101, 101'. That is, in a specific implementation, a detection window or a sensing element may correspond to several detection areas due to a lens (e.g. a Fresnel lens) used in the object detection sensor.

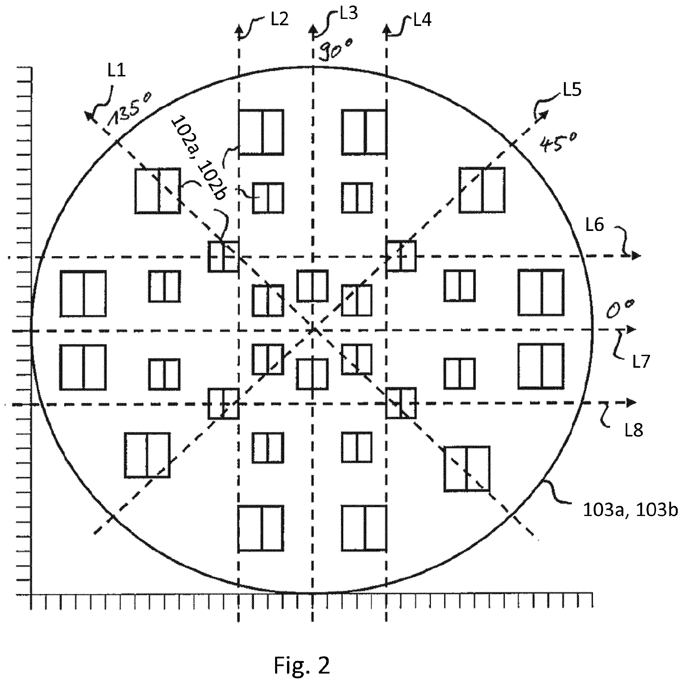

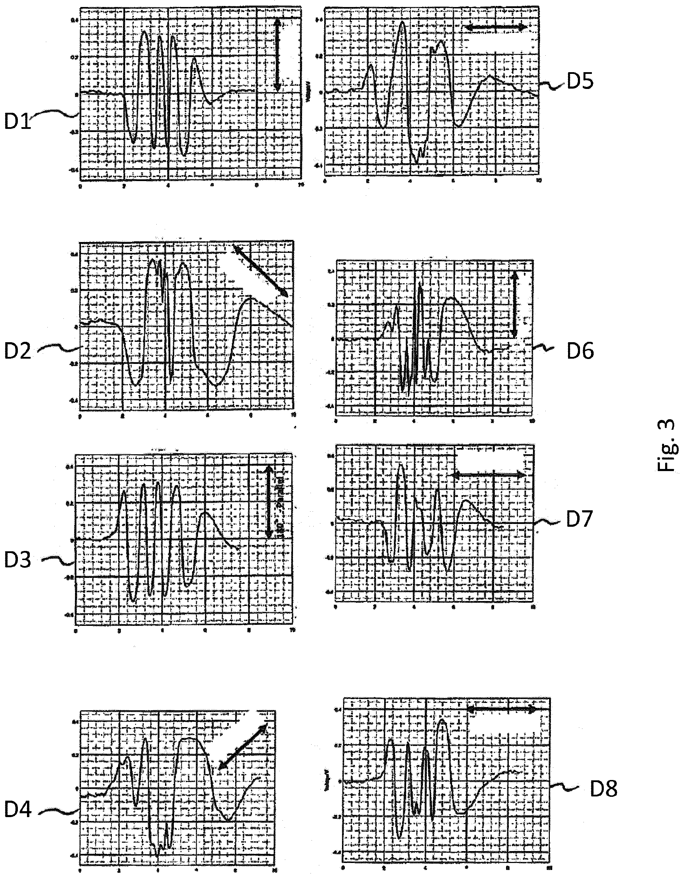

As illustrated in Fig. 1, the network 100 also comprises one or more processing units 105 that are supplied with an analogue output signal 106 of each of the object detection sensors 101, 101'. Although there is only one processing unit 105 shown in Fig. 1, there can be an arbitrary number of processing units 105. In particular, each object detection sensor 101, 101' can be supplied with its own processing unit 105. The determination and processing of the analogue output signal 106 is going to be described in detail in view of Fig. 2 and 3 below. This description of the analogue output signal 106 however includes details which are optional.

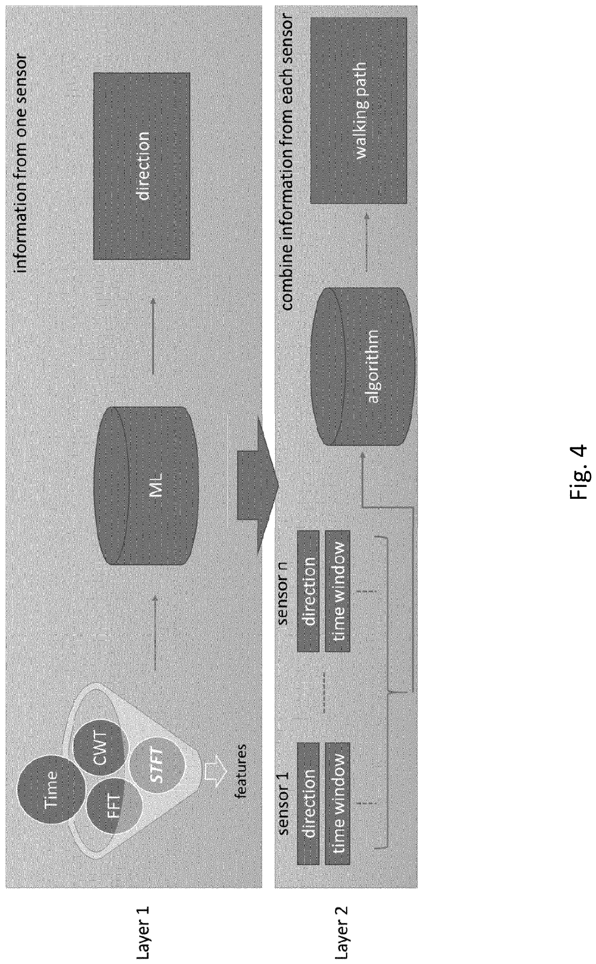

The one or more processing units 105 are also designed for calculating a motion direction 107 of a detected object 108 within the FOV 109, 109' of each object detection sensor 101, 101' based on said analogue output signal 106. The motion direction 107 can e.g. be a motion vector at a predefined point of time. An optional algorithm for calculating the motion direction 107 is going to be described in view of Fig. 4 below. The motion direction 107 can in particular be calculated in Layer 1 of said algorithm. This description in view of Fig. 4 however includes details which are optional.

The network 100 further includes a signal combination unit 110. The signal combination unit 110 is supplied with time-synchronized information 111 of each of the processing units 105, wherein the time-synchronized information 111 represents the respective calculated motion direction 107.

The signal combination unit 110 is also designed to calculate a motion path 112 of the detected object 108 in an area covering the FOVs 109, 109' of all object detection sensors 101, 101'. An optional algorithm for calculating the motion path 112 is going to be described in view of Fig. 4 below. The motion path 112 can in particular be calculated in Layer 2 of said algorithm. This description in view of Fig. 4 however includes details which are optional.

The object detection sensors 101, 101' shown in Fig. 1 are preferably mounted on the ceiling of a room and detect the movement of objects 108 (e.g. humans) under them. The object detection sensors 101, 101' may be commercial motion detectors with a plurality of passive infrared sensor elements, which generate the analogue signal 106 by means of sensor elements or dual sensor elements. The analogue signal 106 may be a voltage varying with time in response to movement that is e.g. sensed by the sensor object detection sensors 101, 101'.

In an example arrangement of the network 100, e.g. if two object detection sensors 101, 101' have an overlapping FOV and one object detection sensor 101 is rotated 90 degrees with respect to the other object detection sensor 101', the resulting analogue signal 106 is different, because of an arrangement of dual elements in the object detection sensor (e.g. a PIR sensor) and e.g. because of a Fresnel lens of the object detection sensor. That is, by doing so, accuracy of a movement direction algorithm can be increased, e.g. if accuracy of one movement direction of a trained model is low.

FIG. 2 shows a schematic view of a detection area 103a, 103b of an object detection sensor 101 for illustration purposes.

Fig. 2 schematically shows the whole detection area 103a, 103b covered by an object detection sensor 101, and schematically shows the detection windows 102a, 102b (which correspond to, or are sensor elements (or dual sensor elements) of the object detection sensor 101), to which heat radiation of an object located in the detection area 103a, 103b is directed, e.g. by means of one or more lenses in the object detection sensor 101.

The dashed lines show eight possible trajectories L1 ... L8 through the detection area 103a, 103b or positions of the movement paths in the detection area 103a, 103b, wherein the movement paths L1, L3, L5 and L7 lead through the center of the detection area 103a, 103b and the movement paths L2, L4, L6 and L8 do not lead through the center. A movement of the object 108 on one of the trajectories L1 ... L8 generates, by the distributed arrangement of the sensor elements 102a, 102b, their duality and the design of the lens in the object detection sensor 101, a typical signal for this trajectory L1 ... L8. This signal differs from the signal curves typical of the other trajectories L1 ... L8 to such an extent that from the characteristic curve or the parameters determined therefrom (alignment of the first vertex, highest occurring frequency, frequency with greatest amplitude, ...) the trajectory L1 ... L8 of the object 108 can be determined. The signals belonging to the individual trajectories L1 ... L8 or their characteristics can be determined in test series. It should be noted that the trajectories L1 ... L8 also indicate the direction of movement, as indicated by the arrows in the figure. The same paths could occur in the reverse direction as trajectories L9 ... L16 and again be distinguished or determined based on their waveforms.

FIG. 3 shows diagrams of analogue signals D1 ... D8 output by an object detection sensor 101 according to the present invention. Fig. 3 in particular shows eight diagrams D1 ... D8 with time profiles of the analogue signal 106 output by the object detection sensor 101 during a movement of an object 108 along the trajectories L1 ... L8 in a respective particular direction. The diagram D1 shows the signal course for the movement of the object 108 on the movement path L4, diagram D2 the signal path for the movement path L1, diagram D3 the signal path for the movement path L2, diagram D4 the signal path for the movement path L5, diagram D5 the signal path for the movement path L7, diagram D6 the signal path for the movement path L3, diagram D7 the signal path for the movement path L6, and diagram D8 the signal path for the movement path L8.

The amount of the differences between the temporal signal curves, which are caused by an object 108 moving on the movement paths L1 ... L8, depends on the design of the object detection sensor 101, in particular its lens. In the case of a symmetrical lens, movements on at least some different trajectories L1 ... L8 can produce similar or identical signal courses, which makes the differentiation more difficult. This can be taken into account in the choice of the object detection sensor 101, its lens, the location of use, the position and orientation of the object detection sensor 101 and / or the movements to be detected.

As already explained above, and as it can also be seen from the diagrams, the curves in this example are different for each of the trajectories L1 ... L8. This also applies to different directions of movement, movements at different distances of the object 108 to the object detection sensor 108, in particular in the case of lateral detection (wall mounting of the sensor 101) and a different number of objects 108 moving.

Since the respective signal curve can depend on the respectively used sensor 101 and on the spatial arrangement, it is advantageous to determine the signal characteristics and their characteristics for each trajectory L1 ... L8 to be detected, direction, distance or number under the actual conditions, on site.

FIG. 4 shows a schematic view of an algorithm for detecting a motion path of an object with a network 100 of object detection sensors 101, 101'. The algorithm is executed by a plurality of processing units 105, and a signal combination unit 110. In particular, some steps of the algorithm are performed by the plurality of processing units 105, while the remaining steps of the algorithm are performed by the signal combination unit 110. In a specific implementation example, the steps performed in Layer 1 of the algorithm relate to the steps performed by the plurality of processing units 105. The steps performed in Layer 2 of the algorithm relate to the steps performed by the signal combination unit 110.

The concept of the algorithm, which uses logged data (i.e. the analogous signal 106) from the object detection sensors 101, 101' to calculate a trajectory of the object 108, is shown schematically in Fig. 4. The information flow is split into two layers. In Layer 1, the data output by an object detection sensor 101 is processed. The output from Layer 1 flows into Layer 2, which combines the information from all object detection sensors 101, 101' and finally outputs the motion path 112 of the object 108. This subdivision into two layers makes the object detection sensor network 100 more flexible. Depending on an environment or room size, a different number of object detection sensors 101, 101' is needed to cover the FOV 109, 109' of the object detection sensors 101, 101'. Furthermore, the density of the network 100 can be increased, to increase the accuracy of the algorithm in Layer 2 by overlapping of the FOVs 109, 109', which however increases installation costs.

In the following, the procedure in the two layers will be described. In Layer 1, a raw 1-dimensional signal (i.e. the analogous signal 106) of a sensor 101 is processed and treated with various signal processing techniques of time domain, frequency domain and scale range (e.g. wavelet processing). Features extracted by this approach then flow into a ML model that classifies between different directions (described e.g. in view of Fig. 2 and 3 above). On the abstraction level Layer 2, the classified directions (i.e. the motion directions 107) of all object detection sensors 101, 101' from the network 100 (and, depending on the applied ML algorithm, further information, such as time stamps) flow into the algorithm which performs sensor fusion between the sensors, and - as a result - represents the path of movement 112 of the objects 108.

In other words, Fig. 4 shows an algorithm representing a two-layer system. At Layer 1, information from one object detection sensor 101 is considered, while in Layer 2, a combination of information from multiple object detection sensors 101, 101' is considered.

In Layer 1, features for ML algorithms are created by applying wavelet processing (i.e. combinating time and frequency domains) to the analogous signal 106. In this step, additionally or alternatively, in particular a long short-term memory (LSTM) neural network can be used with the analogous signal 106.

In Layer 2, information relating to each object detection sensor is gathered and algorithms/rules are applied to the gathered information to determine an overall path 112 of a detected object 108.

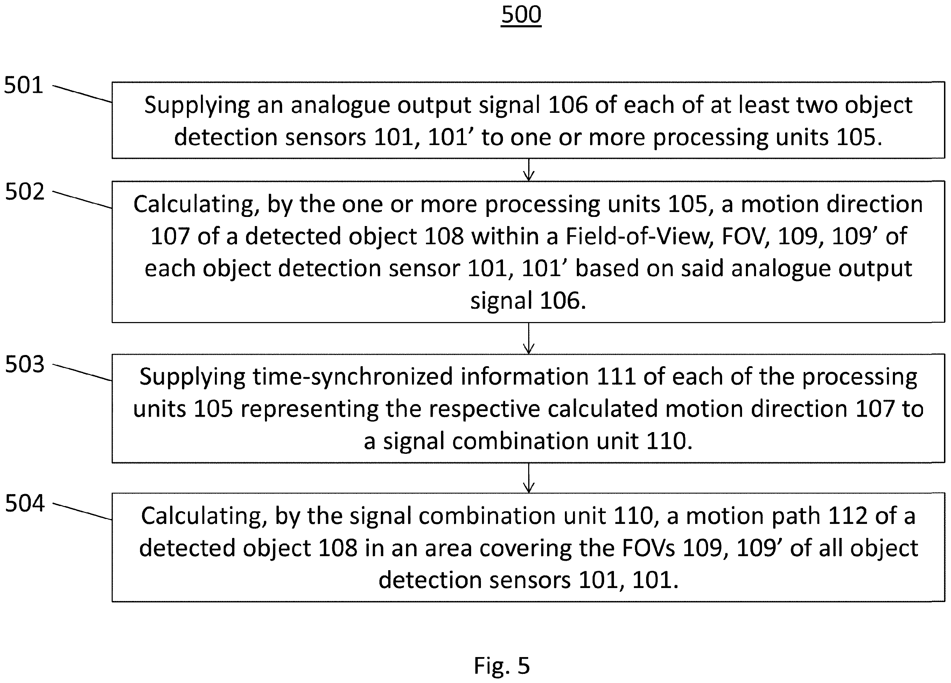

FIG. 5 shows another schematic view of a method 500 for illustration purposes.

The method 500 is for operating an object detection sensor network 100 according to the first aspect or any of its implementations, wherein the network 100 comprises at least two object detection sensors 101, 101', each object detection sensor 101, 101' having at least two detection windows 102a, 102b, 102a', 102b' covering different detection areas 103a, 103b, 103a', 103b' or detection angles 104a, 104b, 104a', 104b', wherein the network 100 further comprises one or more processing units 105, and a signal combination unit 110.

The method 500 comprises a first step of supplying 501 an analogue output signal 106 of each of said object detection sensors 101, 101' to the one or more processing units 105.

The method 500 comprises a second step of calculating 502, by the one or more processing units 105, a motion direction 107 of a detected object 108 within the Field-of-View, FOV, 109, 109' of each object detection sensor 101, 101' based on said analogue output signal 106.

The method 500 comprises a third step of supplying 503, time-synchronized information 111 of each of the processing units 105 representing the respective calculated motion direction 107 to the signal combination unit 110.

The method 500 comprises a fourth step of calculating 504, by the signal combination unit 110, a motion path 112 of the detected object 108 in an area covering the FOVs 109, 109' of all object detection sensors 101, 101'.

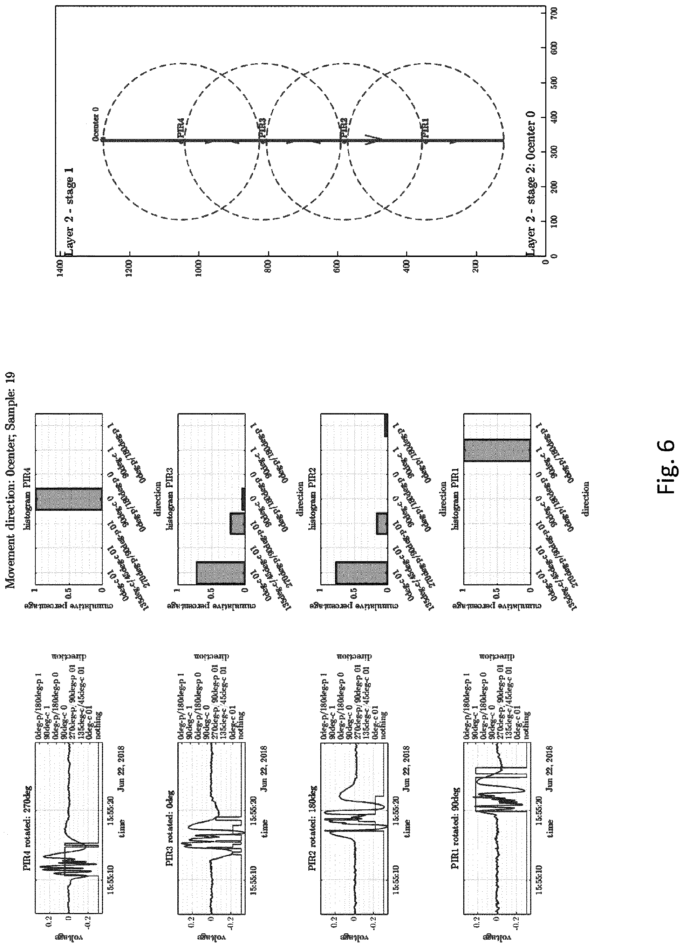

FIG. 6 shows analysis results of data processed in the object detection sensor network 100 according to an embodiment of the present invention.

In Fig. 6, analogue signals 106 (which are output by the object detection sensors PIR1, PIR2, PIR3 and PIR4), classification by labels, a histogram with the percentage of respective classes, the FOV of the object detection sensors PIR1, PIR2, PIR3 and PIR4, a tracked motion path and a detected motion path (which is detected by the algorithm for all object detection sensors PIR1, PIR2, PIR3, and PIR4 of the shown network) are shown. The detected motion path on the right hand side corresponds to the signals that are output by the object detection sensors PIR1, PIR2, PIR3 and PIR4 that are shown on the left hand side.

## Claims

1. An object detection sensor network (100) comprising:
- at least two object detection sensors (101, 101'), each object detection sensor (101, 101') having at least two detection windows (102a, 102b, 102a', 102b') covering different detection areas (103a, 103b, 103a', 103b') or detection angles (104a, 104b, 104a', 104b'),
- a plurality of processing units (105) supplied with an analogue output signal (106) of each of said object detection sensors (101, 101') and designed for calculating a motion direction (107) of a detected object (108) within the Field-of-View, FOV, (109, 109') of each object detection sensor (101, 101') based on said analogue output signal (106),
- a signal combination unit (110), supplied with time-synchronized information (111) of each of the processing units (105) representing the respective calculated motion direction (107), and designed for calculating a motion path (112) of the detected object (108) in an area covering the FOVs (109, 109') of all object detection sensors (101, 101'),
wherein the plurality of processing units (105) are further configured to process the analogue output signal (106) by means of a time domain signal processing technique, a frequency domain signal processing technique and a scale range signal processing technique to extract features from the analogue output signal (106), and to provide the extracted features to a machine learning, ML, model in each of the plurality of processing units (105), the ML model being configured to classify between different directions to calculate the motion direction (107) of the detected object (108); and wherein the signal combination unit (110) is further configured to provide the calculated motion directions (107) of all object detection sensors (101, 101') to an algorithm in the signal combination unit (110), the algorithm being configured to perform sensor fusion between the object detection sensors (101, 101') to calculate the motion path (112) of the detected object (108).

2. The network (100) of claim 1,
wherein the object detection sensors (101, 101') are passive infrared, PIR, sensors.

3. The network (100) of any of the preceding claims,
wherein the object detection sensors (101, 101') have partially overlapping FOVs (109, 109').

4. The network (100) of any of the preceding claims,
wherein the object detection sensors (101, 101') send their analogue output signals (106) to a central processing and signal combination unit.

5. The network (100) of any of the preceding claims,
wherein the plurality of processing units (105) calculate the motion direction (107) in a time synchronized manner and/or associate a time stamp with the calculated motion direction (107), wherein the time stamp is supplied to the signal combination unit (110) together with the information (111) representing the calculated motion direction (107).

6. The network (100) of any of the preceding claims,
wherein the object detection sensors (101, 101') are arranged in the same room of a building.

7. The network (100) of any of the preceding claims,
wherein the signal combination unit (110) is designed to calculate the most probable motion path (112).

8. A method (500) for operating an object detection sensor network (100) according to any one of the preceding claims, wherein the method comprises the steps of:
- supplying (501) an analogue output signal (106) of each of at least two object detection sensors (101, 101') to a plurality of processing units (105),
- calculating (502), by the plurality of processing units (105), a motion direction (107) of a detected object (108) within the Field-of-View, FOV, (109, 109') of each object detection sensor (101, 101') based on said analogue output signal (106),
- supplying (503) time-synchronized information (111) of each of the processing units (105) representing the respective calculated motion direction (107) to a signal combination unit (110), and
- calculating (504), by the signal combination unit (110), a motion path (112) of the detected object (108) in an area covering the FOVs (109, 109') of all object detection sensors (101, 101'),
wherein each object detection sensor (101, 101') has at least two detection windows (102a, 102b, 102a', 102b') covering different detection areas (103a, 103b, 103a', 103b') or detection angles (104a, 104b, 104a', 104b')
wherein the plurality of processing units (105) process the analogue output signal (106) by means of a time domain signal processing technique, a frequency domain signal processing technique and a scale range signal processing technique to extract features from the analogue output signal (106), and provide the extracted features to a machine learning, ML, model in each of the plurality of processing units (105), the ML model classifying between different directions to calculate the motion direction (107) of the detected object (108); and
wherein the signal combination unit (110) provides the calculated motion directions (107) of all object detection sensors (101, 101') to an algorithm in the signal combination unit (110), the algorithm performing sensor fusion between the object detection sensors (101, 101') to calculate the motion path (112) of the detected object (108).

## Patentansprüche

1. Objekterfassungssensornetzwerk (100), umfassend:
- mindestens zwei Objekterfassungssensoren (101, 101'), wobei jeder Objekterfassungssensor (101, 101') mindestens zwei Erfassungsfenster (102a, 102b, 102a', 102b') aufweist, die unterschiedliche Erfassungsbereiche (103a, 103b, 103a', 103b') oder Erfassungswinkel (104a, 104b, 104a', 104b') abdecken,
- eine Vielzahl von Verarbeitungseinheiten (105), die mit einem analogen Ausgangssignal (106) jedes der Objekterfassungssensoren (101, 101') versorgt werden und zum Berechnen einer Bewegungsrichtung (107) eines erfassten Objekts (108) innerhalb des Sichtfelds, FOV, (109, 109') jedes Objekterfassungssensors (101, 101') basierend auf dem analogen Ausgangssignal (106) ausgebildet sind,
- eine Signalkombinationseinheit (110), die mit zeitlich synchronisierten Informationen (111) jeder der Verarbeitungseinheiten (105) versorgt wird, die die jeweilige berechnete Bewegungsrichtung (107) darstellen, und zum Berechnen eines Bewegungswegs (112) des erfassten Objekts (108) in einem Bereich ausgebildet ist, der die FOVs (109, 109') aller Objekterfassungssensoren (101, 101') abdeckt,
wobei die Vielzahl von Verarbeitungseinheiten (105) ferner konfiguriert ist, um das analoge Ausgangssignal (106) mittels einer Zeitbereichssignalverarbeitungstechnik, einer Frequenzbereichssignalverarbeitungstechnik und einer Skalenbereichssignalverarbeitungstechnik zu verarbeiten, um Merkmale aus dem analogen Ausgangssignal (106) zu extrahieren, und um die extrahierten Merkmale einem Maschinenlernmodell, ML-Modell, in jeder der Vielzahl von Verarbeitungseinheiten (105) bereitzustellen, wobei das ML-Modell konfiguriert ist, um zwischen unterschiedlichen Richtungen zu klassifizieren, um die Bewegungsrichtung (107) des erfassten Objekts (108) zu berechnen; und wobei die Signalkombinationseinheit (110) ferner konfiguriert ist, um die berechneten Bewegungsrichtungen (107) aller Objekterfassungssensoren (101, 101') an einen Algorithmus in der Signalkombinationseinheit (110) bereitzustellen, wobei der Algorithmus konfiguriert ist, um eine Sensorfusion zwischen den Objekterfassungssensoren (101, 101') durchzuführen, um den Bewegungsweg (112) des erfassten Objekts (108) zu berechnen.

2. Netzwerk (100) nach Anspruch 1,
wobei die Objekterfassungssensoren (101, 101') passive InfrarotSensoren, PIR-Sensoren, sind.

3. Netzwerk (100) nach einem der vorstehenden Ansprüche,
wobei die Objekterfassungssensoren (101, 101') teilweise überlappende FOVs (109, 109') aufweisen.

4. Netzwerk (100) nach einem der vorstehenden Ansprüche,
wobei die Objekterfassungssensoren (101, 101') ihre analogen Ausgangssignale (106) an eine zentrale Verarbeitungs- und Signalkombinationseinheit senden.

5. Netzwerk (100) nach einem der vorstehenden Ansprüche,
wobei die Vielzahl von Verarbeitungseinheiten (105) die Bewegungsrichtung (107) in einer zeitlich synchronisierten Weise berechnen und/oder einen Zeitstempel mit der berechneten Bewegungsrichtung (107) verknüpfen, wobei der Zeitstempel der Signalkombinationseinheit (110) zusammen mit den Informationen (111) zugeführt wird, die die berechnete Bewegungsrichtung (107) darstellen.

6. Netzwerk (100) nach einem der vorstehenden Ansprüche,
wobei die Objekterfassungssensoren (101, 101') in demselben Raum eines Gebäudes angeordnet sind.

7. Netzwerk (100) nach einem der vorstehenden Ansprüche,
wobei die Signalkombinationseinheit (110) ausgebildet ist, um den wahrscheinlichsten Bewegungsweg (112) zu berechnen.

8. Verfahren (500) zum Betreiben eines Objekterfassungssensornetzwerks (100) nach einem der vorstehenden Ansprüche, wobei das Verfahren die Schritte umfasst:
- Zuführen (501) eines analogen Ausgangssignals (106) jedes von mindestens zwei Objekterfassungssensoren (101, 101') an eine Vielzahl von Verarbeitungseinheiten (105),
- Berechnen (502), durch die Vielzahl von Verarbeitungseinheiten (105), einer Bewegungsrichtung (107) eines erfassten Objekts (108) innerhalb des Sichtfelds, FOV, (109, 109') jedes Objekterfassungssensors (101, 101') basierend auf dem analogen Ausgangssignal (106),
- Zuführen (503) von zeitlich synchronisierten Informationen (111) jeder der Verarbeitungseinheiten (105), die die jeweilige berechnete Bewegungsrichtung (107) darstellen, an eine Signalkombinationseinheit (110), und
- Berechnen (504), durch die Signalkombinationseinheit (110), eines Bewegungswegs (112) des erfassten Objekts (108) in einem Bereich, der die FOVs (109, 109') aller Objekterfassungssensoren (101, 101') abdeckt,
wobei jeder Objekterfassungssensor (101, 101') mindestens zwei Erfassungsfenster (102a, 102b, 102a', 102b') aufweist, die unterschiedliche Erfassungsbereiche (103a, 103b, 103a', 103b') oder Erfassungswinkel (104a, 104b, 104a', 104b') abdecken,
wobei die Vielzahl von Verarbeitungseinheiten (105) das analoge Ausgangssignal (106) mittels einer Zeitbereichssignalverarbeitungstechnik, einer Frequenzbereichssignalverarbeitungstechnik und einer Skalenbereichssignalverarbeitungstechnik verarbeitet, um Merkmale aus dem analogen Ausgangssignal (106) zu extrahieren, und um die extrahierten Merkmale einem Maschinenlernmodell, ML-Modell, in jeder der Vielzahl von Verarbeitungseinheiten (105) bereitzustellen, wobei das ML-Modell zwischen unterschiedlichen Richtungen klassifiziert, um die Bewegungsrichtung (107) des erfassten Objekts (108) zu berechnen;
und
wobei die Signalkombinationseinheit (110) die berechneten Bewegungsrichtungen (107) aller Objekterfassungssensoren (101, 101') an einen Algorithmus in der Signalkombinationseinheit (110) bereitstellt, wobei der Algorithmus eine Sensorfusion zwischen den Objekterfassungssensoren (101, 101') durchführt, um den Bewegungsweg (112) des erfassten Objekts (108) zu berechnen.

## Revendications

1. Réseau de capteurs de détection d'objet (100) comprenant :
- au moins deux capteurs de détection d'objet (101, 101'), chaque capteur de détection d'objet (101, 101') ayant au moins deux fenêtres de détection (102a, 102b, 102a', 102b') couvrant différentes zones de détection (103a, 103b, 103a', 103b') ou différents angles de détection (104a, 104b, 104a', 104b'),
- une pluralité d'unités de traitement (105) alimentées par un signal de sortie analogique (106) de chacun desdits capteurs de détection d'objet (101, 101') et conçues pour calculer une direction de mouvement (107) d'un objet détecté (108) à l'intérieur du champ de vision, FOV, (109, 109') de chaque capteur de détection d'objet (101, 101') sur la base dudit signal de sortie analogique (106),
- une unité de combinaison de signaux (110), alimentée par des informations synchronisées dans le temps (111) de chacune des unités de traitement (105) représentant la direction de mouvement calculée respective (107), et conçue pour calculer un trajet de mouvement (112) de l'objet détecté (108) dans une zone couvrant les FOV (109, 109') de tous les capteurs de détection d'objet (101, 101'),
dans lequel la pluralité d'unités de traitement (105) est en outre configurée pour traiter le signal de sortie analogique (106) au moyen d'une technique de traitement de signal de domaine temporel, d'une technique de traitement de signal de domaine fréquentiel et d'une technique de traitement de signal de plage d'échelle pour extraire des caractéristiques du signal de sortie analogique (106), et pour fournir les caractéristiques extraites à un modèle d'apprentissage machine, ML, dans chaque unité de la pluralité d'unités de traitement (105), le modèle ML étant configuré pour faire un classement entre différentes directions pour calculer la direction de mouvement (107) de l'objet détecté (108) ; et dans lequel l'unité de combinaison de signaux (110) est en outre configurée pour fournir les directions de mouvement calculées (107) de tous les capteurs de détection d'objet (101, 101') à un algorithme dans l'unité de combinaison de signaux (110), l'algorithme étant configuré pour effectuer une fusion de capteurs entre les capteurs de détection d'objet (101, 101') pour calculer le trajet de mouvement (112) de l'objet détecté (108).

2. Réseau (100) selon la revendication 1,
dans lequel les capteurs de détection d'objet (101, 101') sont des capteurs infrarouges passifs, PIR.

3. Réseau (100) selon l'une quelconque des revendications précédentes,
dans lequel les capteurs de détection d'objet (101, 101') ont des FOV partiellement chevauchants (109, 109').

4. Réseau (100) selon l'une quelconque des revendications précédentes,
dans lequel les capteurs de détection d'objet (101, 101') envoient leurs signaux de sortie analogiques (106) à une unité centrale de traitement et de combinaison de signaux.

5. Réseau (100) selon l'une quelconque des revendications précédentes,
dans lequel la pluralité d'unités de traitement (105) calcule la direction de mouvement (107) d'une manière synchronisée dans le temps et/ou associe un horodatage à la direction de mouvement calculée (107), dans lequel l'horodatage est fourni à l'unité de combinaison de signaux (110) conjointement avec les informations (111) représentant la direction de mouvement calculée (107).

6. Réseau (100) selon l'une quelconque des revendications précédentes,
dans lequel les capteurs de détection d'objet (101, 101') sont agencés dans la même pièce d'un bâtiment.

7. Réseau (100) selon l'une quelconque des revendications précédentes,
dans lequel l'unité de combinaison de signaux (110) est conçue pour calculer le chemin de mouvement le plus probable (112).

8. Procédé (500) permettant de faire fonctionner un réseau de capteurs de détection d'objet (100) selon l'une quelconque des revendications précédentes, dans lequel le procédé comprend les étapes de :
- fourniture (501) d'un signal de sortie analogique (106) de chacun d'au moins deux capteurs de détection d'objet (101, 101') à une pluralité d'unités de traitement (105),
- calcul (502), par la pluralité d'unités de traitement (105), d'une direction de mouvement (107) d'un objet détecté (108) à l'intérieur du champ de vision, FOV, (109, 109') de chaque capteur de détection d'objet (101, 101') sur la base dudit signal de sortie analogique (106),
- fourniture (503) d'informations synchronisées dans le temps (111) de chacune des unités de traitement (105) représentant la direction de mouvement calculée respective (107) à une unité de combinaison de signaux (110), et
- calcul (504), par l'unité de combinaison de signaux (110), d'un trajet de mouvement (112) de l'objet détecté (108) dans une zone couvrant les FOV (109, 109') de tous les capteurs de détection d'objet (101, 101'),
dans lequel chaque capteur de détection d'objet (101, 101') a au moins deux fenêtres de détection (102a, 102b, 102a', 102b') couvrant différentes zones de détection (103a, 103b, 103a', 103b') ou différents angles de détection (104a, 104b, 104a', 104b')
dans lequel la pluralité d'unités de traitement (105) traite le signal de sortie analogique (106) au
au moyen d'une technique de traitement de signal de domaine temporel, d'une technique de traitement de signal de domaine fréquentiel et d'une technique de traitement de signal de plage d'échelle pour extraire des caractéristiques du signal de sortie analogique (106), et pour fournir les caractéristiques extraites à un modèle d'apprentissage machine, ML, dans chaque unité de la pluralité d'unités de traitement (105), le modèle ML faisant un classement entre différentes directions pour calculer la direction de mouvement (107) de l'objet détecté (108) ; et
dans lequel l'unité de combinaison de signaux (110) fournit les directions de mouvement calculées (107) de tous les capteurs de détection d'objet (101, 101') à un algorithme dans l'unité de combinaison de signaux (110), l'algorithme réalisant une fusion de capteurs entre les capteurs de détection d'objet (101, 101') pour calculer le trajet de mouvement (112) de l'objet détecté (108).
